# EUROPÄISCHE PATENTSCHRIFT

(11) **EP 1 841 986 B1**
(45) Veröffentlichungstag und Bekanntmachung des Hinweises auf die Patenterteilung: **12.08.2009**
(21) Anmeldenummer: 05790043.3
(22) Anmeldetag: 05.10.2005
(51) Int. Cl.: F16H 7/08

(54) **HYDRAULISCHES SPANNSYSTEM**
HYDRAULIC TENSIONING SYSTEM
SYSTEME DE TENSION HYDRAULIQUE

(30) Priorität: 26.10.2004 US 622125 P
(43) Veröffentlichungstag der Anmeldung: 10.10.2007
(73) Patentinhaber: Schaeffler KG, 91074 Herzogenaurach (DE)
(72) Erfinder: BOTEZ, Lucian, Novi, MI 48375 (US); GLASS, Brandon, Royal Oak, MI 48067 (US); SCHUSEIL, Bolko, 91325 Adelsdorf (DE)
(86) Internationale Anmeldenummer: PCT/EP2005/010711
(87) Internationale Veröffentlichungsnummer: WO 2006/045406

(56) Entgegenhaltungen:
- EP-A- 0 812 999
- DE-A1- 4 443 095
- DE-A1- 19 631 607
- DE-A1- 19 909 685

## Beschreibung

### Gebiet der Erfindung

Die vorliegende Erfindung betrifft ein hydraulisches Spannsystem gemäß dem Oberbegriff von Anspruch 1, und wie es aus der DE 4443095A bekannt ist.

Ein Spannsystem ist beispielsweise aus der DE 196 31 607 A1 bekannt. Bei diesem hydraulischen Spannsystem kann ein längerer Stillstand der Brennkraftmaschine dazu führen, dass sich ein Druckabbau im Druckraum des Spannsystems einstellt, da Hydraulikfluid entweicht, mit dem der Druckraum von der Druckumlaufschmierung der Brennkraftmaschine beaufschlagt wird. Beim Start der Brennkraftmaschine, in dem Zeitraum bis zum Erreichen des Druckaufbaus in dem Druckraum ist das hydraulische Spannsystem nicht in der Lage, eine erforderliche Vorspannung des Zugmittels zu realisieren. Als Folge stellt sich ein erhöhtes Geräuschniveau ein, hervorgerufen durch ein Rasseln bzw. Anschlagen des Zugmittels oder einer mit dem Zugmittel in Verbindung stehenden Spannschiene an dem Spannsystem. Gleichzeitig stellt sich in der Startphase der Brennkraftmaschine bis zum Erreichen des Druckaufbaus im Druckraum ein erhöhter Verschleiß ein.

### Hintergrund der Erfindung

Die Geräuschentwicklung in der Startphase der Brennkraftmaschine bei den bekannten hydraulischen Spannsystemen erfüllt nicht die Komfortansprüche, die an heutige Fahrzeuge gestellt werden. Diese Spannsysteme üben mittels eines druckbeaufschlagten Kolbens im Betriebszustand eine vorbestimmte Spannung auf das Zugmittel aus. Das im Normalbetrieb vorgespannte Zugmittel, insbesondere eine Kette, verringert bzw. eliminiert eine Verschleißlängung und dämpft weitestgehend auftretende Schwingungen, die beispielsweise durch die Drehungleichförmigkeit der Brennkraftmaschine ausgelöst und in den Endlostrieb eingeleitet werden. Die bekannten hydraulischen Spannsysteme sind jedoch nicht geeignet, bei einem reduzierten, bzw. nicht ausreichenden Druck des Hydraulikfluids in dem Druckraum sowie bei hochfrequenten Belastungsstößen des Zugmittels eine geräuscharme Führung des Zugmittels zu gewährleisten.

### Zusammenfassung der Erfindung

Aufgabe der vorliegenden Erfindung ist es, ein gattungsgemäßes, hydraulisches Spannsystem derart weiter zu bilden, dass dieses in allen Betriebszuständen der Brennkraftmaschine eine wirksame und geräuscharme Führung des Zugmittels sicherstellt.

Diese Problemstellung wird durch das erfindungsgemäße Spannsystem gemäß Anspruch 1 gelöst.

Durch den konstruktiven Aufbau eines Spannsystems nach Anspruch 1 ist sowohl bei einem nicht ausreichenden Druckaufbau des Hydraulikfluids als auch bei auftretenden hochfrequenten Schwingungen das Zugmittel des Zugmitteltriebs an einem elastischen Endanschlag abgestützt. Dieser eine zweite Dämpfungseinrichtung des hydraulischen Spannsystems bildende Endanschlag gewährleistet in der Startphase der Brennkraftmaschine eine geräuscharme Führung des Zugmittels. Dabei ist der Druckraum des Spannsystems, der bevorzugt mit der Drucköl-Umlaufschmierung der Brennkraftmaschine in Verbindung steht, noch nicht ausreichend mit Hydraulikfluid gefüllt, wodurch der Kolben des Spannsystems keine bzw. keine ausreichende Vorspannung des Zugmittels gewährleistet.

Durch die erfindungsgemäße Maßnahme wird vorteilhaft in der Startphase der Brennkraftmaschine ein großer nachteiliger Abstand zwischen dem hydraulischen Spannsystem und dem Zugmittel vermieden, wobei auftretende Schwingungen des Zugmittels aufgrund des elastischen Endanschlages an dem erfindungsgemäßen Spannsystems wirksam gedämpft werden. Damit verbunden werden nachteilige Vibrationen des Zugmitteltriebs unterbunden, sowie ein nachteiliges, die Geräuschentwicklung steigerndes Rattern oder Schlagen der Kette, aufgrund der Führungseigenschaft des elastischen Endanschlages.

Neben einer vorteilhaften geräuscharmen Funktion in der Startphase bietet das erfindungsgemäße Spannsystem auch für hochfrequente Schwingungen des Endlostriebs im normalen Betriebszustand eine geräuschoptimierte und sichere Führung des Zugmittels. Die Drehungleichförmigkeit der Brennkraftmaschine kann zu hochfrequenten Schwingungen des Endlostriebs führen, die ebenfalls ein Schlagen oder Rattern des Zugmittels auslösen. Dabei ist der Kolben des hydraulischen Spannsystems Stoßbelastungen ausgesetzt, die in Abhängigkeit von der kinematischen Viskosität des Hydraulikfluids, eine kurzzeitige entgegen der Kraftbeauschlagung gerichtete Stellbewegung des Kolbens auslösen. Der zurückgedrängte Kolben bewirkt ein entlastetes Zugmittel, das an dem elastischen Endanschlag anliegt.

Bei bisherigen Spannsystemen führte die kurzzeitige Entlastung zu einem Schlagen oder Rasseln des Zugmittels oder zu einem Anschlagen der Kette beispielsweise an dem Gehäuse des Spannsystems. Gemäß der Erfindung werden vorteilhaft die Stoßbelastungen bei hochfreqenten Schwingungen des Zugmitteltriebs, insbesondere der Kette durch das erfindungsgemäße zweite Dämpfungssystem des Spannsystem wirksam abgefangen bzw. unterbunden.

Dadurch stellt sich ein verbesserter mechanischer Wirkungsgrad und eine erhöhte Dauerfestigkeit des Zugmittels und damit des gesamten Zugmitteltriebs ein.

In vorteilhafter Weise eliminiert der erfindungsgemäße elastische Endanschlag in allen auftretenden Betriebszuständen der Brennkraftmaschine nachteilige Ausschläge des Zugmittels oder begrenzt deren Amplituden, was sich vorteilhaft auf die Funktion und die Lebensdauer des gesamten Endlostriebs auswirkt. Dabei stellt der erfindungsgemäße elastische Endanschlag ein konstruktiv einfaches Bauteil dar, das kostengünstig herstellbar und montierbar ist. Damit ergibt sich eine kostenoptimierte wirksame Lösung, das Geräuschniveau des Zugmittels verringert und damit heutigen Komfortansprüchen genügt.

Das weitere Dämpfungssystem gemäß der Erfindung, das einen elastischen Endanschlag für ein hydraulisches Spannsystem einschließt, arbeitet parallel zu der Hydraulikeinheit, tritt jedoch nur in Grenzbereichen in Funktion, wenn das hydraulische Spannsystem außer Kraft gesetzt ist. Dazu zählen insbesondere die Startphase der Brennkraftmaschine in der noch kein ausreichender Druck des Hydraulikfluids aufgebaut ist oder hochfrequente Schwingungen des Zugmittels, bei denen der Kolben kurzfristig in den Zylinder einfährt.

Bei Bedarf ist der erfindungsgemäße elastische Endanschlag nachrüstbar. Beispielsweise kann dieses Bauteil im Rahmen einer Fahrzeuginspektion in bereits ausgelieferte Fahrzeuge integriert werden. Neben einer kostengünstigen Herstellung und Montage bedarf der erfindungsgemäße elastische Endanschlag keinen zusätzlichen Bauraum, so dass keine Anpassungskonstruktion erforderlich ist.

Weitere vorteilhafte Ausgestaltungen der Erfindung sind Gegenstand der abhängigen Ansprüche 2 bis 10.

Gemäß einer vorteilhaften Ausgestaltung der Erfindung ist als Endanschlag ein elastischer Zapfen vorgesehen, der dem Gehäuse des hydraulischen Spannsystems zugeordnet ist. Als Zapfen ist dabei ein Bauteil vorgesehen, dessen Länge einen Austrittsbereich des Kolbens aus dem Gehäuse in einer eingefahrenen Endstellung übertrifft. Damit ist sichergestellt, dass beispielsweise in einer Startphase der Brennkraftmaschine, in der im Druckraum des hydraulischen Spannsystems noch kein ausreichender Druck des Hydraulikfluids besteht und folglich der Kolben nicht druckbeaufschlagt ist, das Zugmittel mittelbar oder unmittelbar an dem Endanschlag geführt ist bzw. an diesem anschlägt.

Als vorteilhafte Ausgestaltung schließt die Erfindung als elastischen Endanschlag einen hohlzylindrisch gestalteten Zapfen ein. Dieser insbesondere an dem Gehäuse fixierte Zapfen umschließt den Kolben im Einbauzustand unter Einhaltung eines Ringspaltes, wodurch die Funktion des Kolbens in Betriebszuständen nicht behindert ist. Das hydraulische Spannsystem steht zweckmäßigerweise mit einer Spann- oder Führungsschiene in einer Wirkverbindung, die unmittelbar dem Zugmittel zugeordnet ist. Im Betriebszustand der Brennkraftmaschine und einem erfolgten Druckaufbau in dem Druckraum des hydraulischen Spannsystems ist dessen Kolben an der Spannschiene abgestützt.

Die Erfindung schließt unterschiedlich konstruktiv gestaltete und an dem hydraulischen Spannsystem positionierte elastische Endanschläge ein. Bevorzugt ist der als ein hohlzylindrisch gestalteter Zapfen ausgebildete Endanschlag an dem Gehäuse fixiert. Die Befestigung kann dabei beispielsweise mittels einer Verklebung erfolgen. Dazu bilden die jeweiligen Stirnflächen des Gehäuses und des Zapfens eine ausreichende Kontaktfläche, mit der eine wirksame Verklebung und dauerhafte Befestigung des Endanschlages erzielbar ist.

Alternativ oder ergänzend dazu bietet es sich an, den als hohlzylindrischen Zapfen ausgebildeten Endanschlag, der auch als Muffel zu bezeichnen ist, auf einem aus dem Gehäuse des Spannsystems heraustretenden Abschnitt des Zylinders zu zentrieren. Diese Anordnung vergrößert vorteilhaft die Kontaktfläche zwischen dem Zapfen einerseits und den damit in Verbindung stehenden Bauteilen des Spannsystems andererseits, zur Erzielung einer dauerhaften Befestigung.

Eine weitere Ausgestaltung der Erfindung schließt einen mehrteiligen Aufbau des elastischen Endanschlages vor. Zur Erzielung eines verschleißoptimierten Endanschlages, ist dieser bevorzugt mit einer stirnseitigen Armierung, beispielsweise einer Scheibe versehen, die bevorzugt stoffschlüssig mit dem elastischen Material des Endanschlages verbunden ist. Die Armierung bzw. die Scheibe ist vorzugsweise aus einem hochfesten, verschleißfesten Kunststoff hergestellt, wodurch in der Startphase der Brennkraftmaschine eine dauerhafte Führung des Zugmittels sichergestellt ist.

Alternativ oder ergänzend zu einer stirnseitigen Scheibe bietet es sich weiterhin an, den Endanschlag mit einer längenbegrenzten Buchse zu versehen. Die Buchse erstreckt sich dabei über eine Länge, die dem Maß des austretenden Abschnitts des Zylinders aus dem Gehäuse entspricht. Damit kann die Buchse beispielsweise mittels einer Presspassung auf den vorstehenden Abschnitt des Zylinders aufgepresst werden. Die metallische Buchse wie auch die stirnseitige Scheibe sind bevorzugt mittels einer Vulkanisation oder einer Ultraschallverschweißung stoffschlüssig mit dem elastischen Werkstoff des Endanschlages verbunden.

Als Werkstoff für den elastischen Endanschlag ist vorzugsweise ein Elastomer vorgesehen oder ein beliebig anderer geeigneter Kunststoff, der sowohl schmiermittelresistent als auch in hohen Umgebungstemperaturen von > 150°C dauerhaft einsetzbar ist.

Die Erfindung schließt für das hydraulische Spannsystem weiterhin einen abgedichteten Ringspalt zwischen dem Endanschlag und dem Kolben ein. Dazu eignet sich bevorzugt eine dem Endanschlag im Bereich der zentrischen Bohrung zugeordnete Dichtung, deren Dichtlippe mit einer geringen radialen Vorspannung an der Mantelfläche des Kolbens geführt ist. Diese Maßnahme verhindert wirkungsvoll den Eintritt auch von kleinsten Abriebteilen in den Leckspalt, der sich zwischen dem Kolben und der Zylinderwandung einstellt. Andererseits beeinflusst die Dichtlippe nicht die Dämpfungseinrichtung, wenn Hydraulikfluid über den Leckspalt abgesteuert wird.

### Kurze Beschreibung der Zeichnungen

Verschiedene Ausführungsbeispiele der Erfindung sind in den Figuren dargestellt. Es zeigen:
- Figur 1:: einen Endlostrieb im eingebauten Zustand, in Verbindung des erfindungsgemäßen hydraulischen Spannsystems;
- Figur 2:: eine Schnittdarstellung des erfindungsgemäßen Spannsystems in einer 3 D-Ansicht;
- Figur 3: ein erfindungsgemäßes Spannsystem im Längsschnitt.

### Detaillierte Beschreibung der Zeichnungen

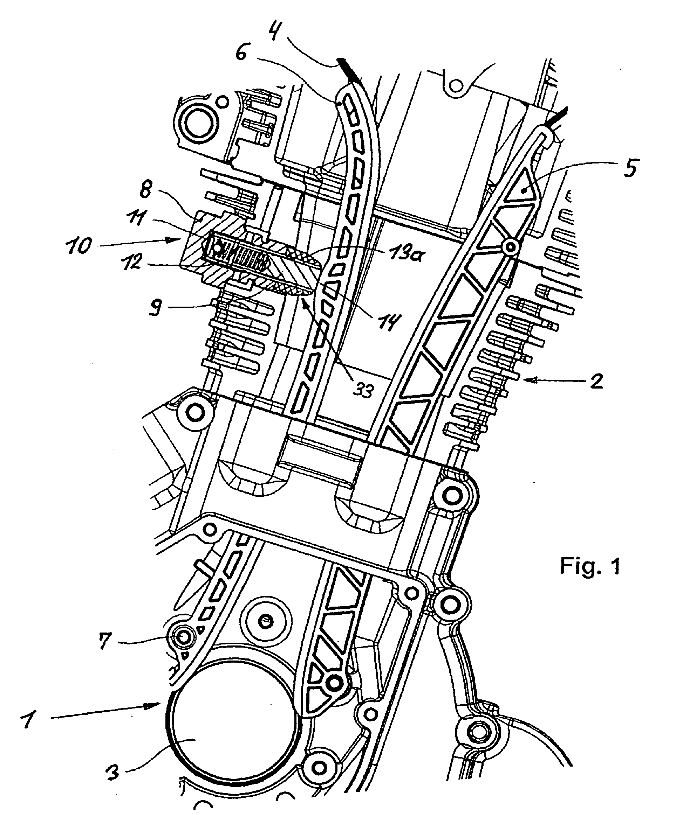

Die Figur 1 zeigt ausschnittsweise einen Endlostrieb 1, der als Kettentrieb einer Brennkraftmaschine 2 ausgebildet ist. Der als Steuertrieb ausgelegte Endlostrieb 1 dient zum Antrieb von Nockenwellen der Brennkraftmaschine 2, die in Figur 1 nicht dargestellt sind. Der Antrieb erfolgt dabei von dem im Uhrzeigersinn umlaufenden, mit der Kurbelwelle der Brennkraftmaschine 2 in Verbindung stehenden Antriebsrad 3 über ein Zugmittel 4, eine Kette, auf die in Figur 1 nicht abgebildeten, mit Nockenwellen der Brennkraftmaschine 2 in Verbindung stehenden weiteren Kettenräder. Im Zugtrum des Endlostriebs 1 ist das Zugmittel 4 an einer Führungsschiene 5 geführt. Dem Leertrum des Zugmittels 4 ist eine Spannschiene 6 zugeordnet, die um eine Drehachse 7 schwenkbar ist. Zu der Drehachse 7 beabstandet ist der Spannschiene 6 ein hydraulisches Spannsystem 10 zugeordnet, das druckbeaufschlagt, die Spannschiene 6 im Uhrzeiger verschwenkt und dabei das Zugmittel 4 vorspannt. Das hydraulische Spannsystem 10 ist mit einem Gehäuse 8 an der Brennkraftmaschine 2 lagefixiert. Zur Druckbeaufschlagung eines in dem Gehäuse 8 integrierten Kolbens 9 steht ein Druckraum 11 des Spannsystems 10 mit einer Druckumlaufschmierung der Brennkraftmaschine 2 in Verbindung. Zusätzlich ist der Kolben 9 über eine im Druckraum 11 eingesetzte Druckfeder 12 angefedert, die den Kolben 9 stets mit einer relativ geringen Vorlast an die Spannschiene 6 drückt.

Bei Stillstand der Brennkraftmaschine 2 kommt es zu einem Abfall des Öldrucks der Druckumlaufschmierung, verbunden mit einem Verlust von Hydraulikfluid des hydraulischen Spannsystems 10, wodurch der Kolben 9 lediglich mit der Kraft der Druckfeder 12 an der Spannschiene 6 anliegt. Bei einem Neustart der Brennkraftmaschine 2, bis zu einem Druckaufbau in dem Druckraum 11, ist das Zugmittel 4 nicht ausreichend vorgespannt, was zu großen Schwingungsausschlägen des Zugmittels 4 in Verbindung mit Stellbewegungen der Spannschiene 6 führt. Dabei wird der angefederte Kolben 9 zurückdrängt, wodurch die Spannschiene 6 an einem elastischen Endanschlag 13a anschlägt bzw. abgestützt ist. Diese Maßnahme reduziert die Geräuschentwicklung des Endlostriebs 1 in der Startphase was gleichzeitig den Verschleiß des Kolbens 9 und der Spannschiene 6 im Bereich einer Kontaktfläche 14 dieser Bauteile verringert.

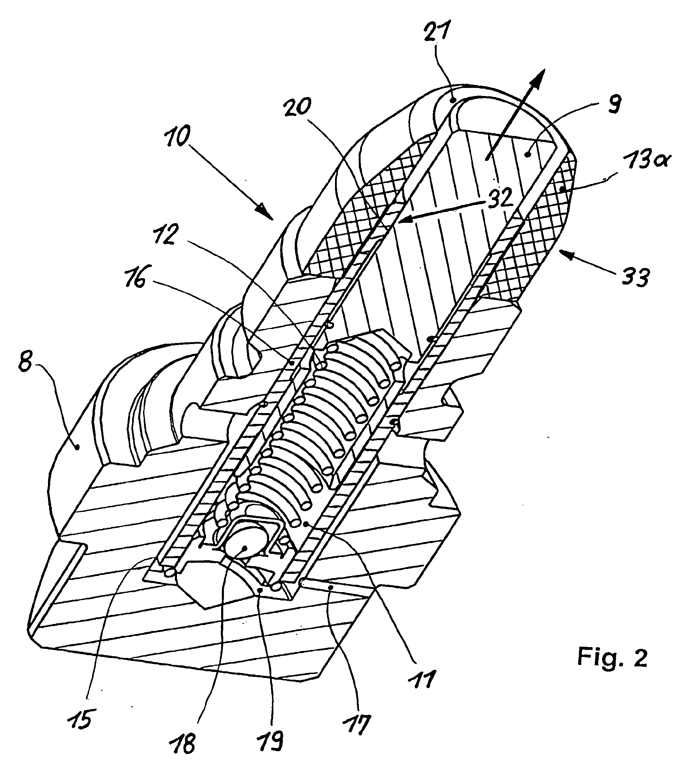

Die Figur 2 verdeutlicht weitere Einzelheiten des hydraulischen Spannsystems 10. Das beispielsweise rotationssymmetrisch gestaltete Gehäuse 8 ist versehen mit einer zentrischen Sacklochbohrung 15, die zur Aufnahme eines Zylinders 16 bestimmt ist. Der als Hülse gestaltete Zylinder 16 dient zur Aufnahme des Kolbens 9, wobei die Bauteile, der Zylinder 16 und der Kolben 9 den Druckraum 11 begrenzen. Der Zylinder 16 weist dazu endseitig ein federbelastetes Einwegventil 18 auf, das den Druckraum 11 von einem den Zylinder 16 örtlich umschließenden, in dem Gehäuse 8 integrierten Vorratsraum 19 für das Hydraulikfluid trennt. Bei einer Druckbeaufschlagung des Vorratsraums 19 mittels einer im Gehäuse 8 eingebrachte Zuführbohrung 17 gelangt das Hydraulikfluid über das Einwegventil 18 in den Druckraum 11 und verschiebt den Kolben 9, bis dieser kraftbeaufschlagt an der Spannschiene 6 anliegt.

Bei auftretenden Spitzenkräften, die beispielsweise durch Belastungsstöße des Zugmittels 4 auf die Spannschiene 6 übertragen werden, wird der Kolben 9 entgegen der Pfeilrichtung zusätzlich belastet. Dadurch wird eine Teilmenge des Hydraulikfluids über die Dämpfungseinrichtung 32 abgesteuert, die sich bildet aus einem Leckspalt 20 zwischen der Mantelfläche des Kolbens 9 und einer Innenwandung des Zylinders 16. Das austretende Hydraulikfluid kann dabei beispielsweise innerhalb der Brennkraftmaschine 2 drucklos in den Ölsumpf zurückströmen. Bereits nach einer geringen Hubbewegung entgegen der Pfeilrichtung stützt sich die in Figur 1 abgebildete Spannschiene 6 an der Stirnfläche 21 des elastischen Endanschlages 13a ab, der zweiten Dämpfungseinrichtung 33, wodurch eine nachteilige Geräuschentwicklung unterbleibt.

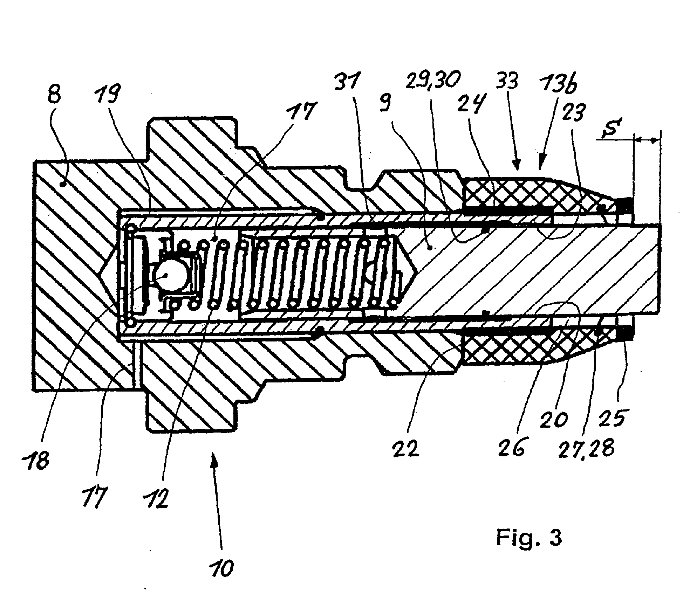

Die Figur 3 zeigt insbesondere erfindungsgemäße Gestaltungsvarianten des Endanschlages 13b. Zur Lagefixierung des Endanschlages 13b an dem Gehäuse 8 bietet sich insbesondere eine Verklebung zwischen den Stirnseiten des Gehäuses 8 und des Endanschlages 13b an, die gemeinsam eine Kontaktfläche 22 bilden. Weiterhin ist der Endanschlag 13b auf einem Abschnitt 23 des Zylinders 16 zentriert, der aus dem Gehäuse 8 austritt und gleichzeitig den Kolben 9 führt. Zur verbesserten Befestigung bietet sich dazu ein armierter Endanschlag 13b an, der eine bevorzugt aus Stahl hergestellte Buchse 24 einschließt, die auf den Abschnitt 23 des Zylinders 16 gepresst ist.

Weiterhin schließt der Endanschlag 13b stirnseitig eine verschleißoptimierte Scheibe 25 ein, an der in der Startphase der Brennkraftmaschine 2 die Spannschiene 6 abgestützt ist. Die Scheibe 25 ist bevorzugt aus einem verschleißfesten, beispielsweise einem glasfaserverstärkten Kunststoff hergestellt. Übereinstimmend ist die Buchse 24 sowie die Scheibe 25 stoffschlüssig mit dem übrigen elastischen Körper des Endanschlags 13b verbunden. Dazu eignet sich beispielsweise ein Vulkanisation oder eine Ultraschallschweißung. Der Endanschlag 13b umfasst außerdem zur Erzielung eines abgedichteten Ringspaltes 26, der sich zwischen dem Kolben 9 und dem Endanschlag 13b einstellt, eine Dichtung 27, deren Dichtlippe 28 mit einer geringen Abstützkraft an der Mantelfläche des Kolbens 9 anliegt. Die Dichtlippe 28 verhindert einerseits einen nachteiligen Eintritt, beispielsweise von Ölschaum in den Ringspalt 26 und ermöglicht andererseits eine ungehinderte Funktion der Dämpfungseinrichtung 32, d.h. ein Absteuern des Hydraulikfluids über den Leckspalt 20 bei einem Kolbenhub in Richtung des Einwegventils 18.

Die Figur 3 zeigt den Kolben 3 des hydraulischen Spannsystems in der Betriebsstellung, bei dem der vom Druck des Hydraulikfluids beaufschlagte Kolben 9 an der in Figur 1 abgebildeten Spannschiene 6 kraftschlüssig abgestützt ist. Dabei ergibt sich ein Hub "s" zwischen den Stirnseiten des Kolbens 9 und des Endanschlages 13b. Der maximale Stellweg des Kolbens 9 gegenüber dem Zylinder 16 wird begrenzt durch einen Sicherungsring 29, der mit einer Teilquerschnittsfläche in eine Ringnut 30 des Kolbens 9 eingesetzt ist und dessen Außenkontur in eine längenbegrenzte Ausnehmung 31 des Zylinders 16 geführt ist.

### Bezugszahlenliste

- 1.: Endlostrieb
- 2.: Brennkraftmaschine
- 3.: Antriebsrad
- 4.: Zugmittel
- 5.: Führungsschiene
- 6.: Spannschiene
- 7.: Drehachse
- 8.: Gehäuse
- 9.: Kolben
- 10.: Spannsystem
- 11.: Druckraum
- 12.: Druckfeder
- 13 a.: Endanschlag
- 13 b.: Endanschlag
- 14.: Kontaktfläche
- 15.: Bohrung
- 16.: Zylinder
- 17.: Zuführbohrung
- 18.: Einwegventil
- 19.: Vorratsraum
- 20.: Leckspalt
- 21.: Stirnfläche
- 22.: Kontaktfläche
- 23.: Abschnitt
- 24.: Buchse
- 25.: Scheibe
- 26.: Ringspalt
- 27.: Dichtung
- 28.: Dichtlippe
- 29.: Sicherungsring
- 30.: Ringnut
- 31.: Aussparung
- 32.: Dämpfungseinrichtung
- 33.: Dämpfungseinrichtung

## Patentansprüche

1. Hydraulisches Spannsystem für einen Endlostrieb (1), insbesondere Kettentrieb einer Brennkraftmaschine (2), mit einem Gehäuse (8) zur Aufnahme eines Zylinders (16), in dem ein angefederter und von einem Hydraulikfluid beaufschlagter, mit einem Zugmittel (4) zusammenwirkender Kolben (9) längsbeweglich geführt ist, der gemeinsam mit dem Zylinder (16) einen mit Hydraulikfluid gefüllten Druckraum (11) begrenzt, wobei zur Dämpfung von Stellbewegungen des Kolbens (9) eine Dämpfungseinrichtung (32) vorgesehen ist, bei der eine Teilmenge des Hydraulikfluids aus dem Druckraum (11) über zumindest einen Leckspalt (20) abgeführt werden kann, wobei bei einem Druckabfall und / oder hochfrequenten Schwingungen des Endlostriebes (1), das Zugmittel (4) mittelbar oder unmittelbar an einem elastischen, eine zweite Dämpfungseinrichtung (33) bildenden Endanschlag (13a,13b) des hydraulischen Spannsystems (10) abgestützt ist, **dadurch gekennzeichnet, dass** ein dem Gehäuse (8) des Spannsystems (10) zugeordneter, gegenüber einer eingefahrenen Stellung des Kolbens (9) vorstehender, hohlzylindrisch gestalteter Zapfen den elastischen Endanschlag (13a, 13b) bildet.

2. Spannsystem nach Anspruch 1, bei dem in einer Startphase der Brennkraftmaschine (2) der Endanschlag (13a,13b) mittelbar oder unmittelbar mit dem Zugmittel (4) zusammenwirkt.

3. Spannsystem nach Anspruch 1 oder nach Anspruch 2, an dem das Zugmittel (4) im Betriebszustand mittelbar mit dem Spannsystems (10) zusammenwirkt, in dem eine Spannschiene (6) an dem Kolben (9) abgestützt ist.

4. Spannsystem nach einem der Ansprüche 1 bis 3 , wobei der als Zapfen gestaltete Endanschlag (13a, 13b) an dem Gehäuse (8) lagefixiert ist.

5. Spannsystem nach einem der Ansprüche 1 bis 4 , bei dem der Endanschlag (13a, 13b) auf einem aus dem Gehäuse (8) austretenden Abschnitt (23) des Zylinders (16) zentriert und stirnseitig an dem Gehäuse (8) abgestützt ist.

6. Spannsystem nach einem der Ansprüche 1 bis 5 , dass einen mehrteilig aufgebauten, die Dämpfungseinrichtung (33) bildenden Endanschlag (13b) umfasst.

7. Spannsystem nach Anspruch 6 , dessen elastischer Endanschlag (13b) stirnseitig eine vorzugsweise aus einem verschleißfesten Kunststoff hergestellte Scheibe (25) einschließt, die insbesondere in einer Startphase der Brennkraftmaschine (2) mit der Spannschiene (6) zusammenwirkt.

8. Spannsystem nach Anspruch 6 , bei dem der Endanschlag (13b) eine aus einem metallischen Werkstoff hergestellte, an dem Gehäuse (8) und / oder dem Zylinder (16) befestigte längenbegrenzte Buchse (24) einschließt, die stoffschlüssig mit dem elastischen Körper des Endanschlags (13b) verbunden ist.

9. Spannsystem nach einem der Ansprüche 1 bis 8 , dessen elastischer Endanschlag (13 a, 13 b) aus einem elastomeren Werkstoff hergestellt ist.

10. Spannsystem nach einem der Ansprüche 1 bis 9 , wobei der Endanschlag (13 b) eine Dichtung (27) umfasst, die in einem radial von dem Kolben (9) und dem Endanschlag (13 b) begrenzten Ringspalt (26) eingesetzt ist und deren Dichtlippe (28) an einer Mantelfläche des Kolbens (9) dichtend abgestützt ist.

## Claims

1. Hydraulic tension system for an endless drive (1), in particular chain drive of an internal combustion engine (2), with a housing (8) for receiving a cylinder (16), in which is guided longitudinally movably a sprong piston (9) which is acted upon by a hydraulic fluid and cooperates with a traction means (4) and which together with a cylinder (16) delimits a pressure space (11) filled with a hydraulic fluid, there being provided, for the damping of actuating movements of the piston (9), a damping device (32) at which a part-quantity of the hydraulic fluid can be discharged out of the pressure space (11) via at least one leakage gap (20), and, in the event of a pressure drop and/or high-frequency oscillations of the endless drive (1), the traction means (4) being supported indirectly or directly on an elastic limit stop (13a, 13b), forming a second damping device (33), of the hydraulic tension system (10), **characterized in that** a tenon of hollow-cylindrical configuration, assigned to the housing (8) of the tension system (10) and projecting with respect to a retracted position of the piston (9), forms the elastic limit stop (13a, 13b).

2. Tension system according to Claim 1, in which, in a starting phase of the internal combustion engine (2), the limit stop (13a, 13b) cooperates indirectly or directly with the traction means (4).

3. Tension system according to Claim 1 or according to Claim 2, on which, in the operating state, the traction means (4) cooperates indirectly with the tension system (10) in that a tension rail (6) is supported on the piston (9).

4. Tension system according to one of Claims 1 to 3, the limit stop (13a, 13b) configured as a tenon being fixed in position on the housing (8).

5. Tension system according to one of Claims 1 to 4, in which the limit stop (13a, 13b) is centred on a portion (23), emerging from the housing (8), of the cylinder (16) and is supported on the end face on the housing (8).

6. Tension system according to one of Claims 1 to 5, which comprises a limit stop (13b) which has a multi-part construction and which forms a damping device (33).

7. Tension system according to Claim 6, the elastic limit stop (13b) of which encloses on the end face a disc (25) which is preferably produced from a wear-resistant plastic and which, particularly in a starting phase of the internal combustion engine (2), cooperates with the tension rail (6).

8. Tension system according to Claim 6, in which the limit stop (13b) encloses a bush (24) of limited length which is produced from a metallic material and is fastened to the housing (8) and/or to the cylinder (16) and which is connected in the materially integral manner to the elastic body of the limit stop (13b).

9. Tension system according to one of Claims 1 to 8, the elastic limit stop (13a, 13b) of which is produced from an elastomeric material.

10. Tension system according to one of Claims 1 to 9, the limit stop (13b) comprising a seal (27) which is inserted in an annular gap (26) delimited radially by the piston (9) and the limit stop (13b) and the sealing lip (28) of which is supported sealingly on a surface area of the piston (9).

## Revendications

1. Système de tension hydraulique pour un entraînement sans fin (1), en particulier un entraînement à chaîne d'un moteur à combustion interne (2), comprenant un boîtier (8) pour recevoir un cylindre (16), dans lequel est guidé de manière déplaçable en longueur un piston (9) suspendu à ressort et sollicité par un fluide hydraulique, coopérant avec un moyen de traction (4), qui limite, conjointement avec le cylindre (16), un espace de pression (11) rempli de fluide hydraulique, un dispositif d'amortissement (32) étant prévu pour amortir les mouvements de réglage du piston (9), avec lequel une quantité partielle du fluide hydraulique peut être évacuée de l'espace de pression (11) par le biais d'au moins une fente de fuite (20), le moyen de traction (4), en cas de chute de pression et/ou d'oscillations de haute fréquence de l'entraînement sans fin (1), étant supporté de manière directe ou indirecte sur une butée de fin de course élastique (13a, 13b) du système de tension hydraulique (10), formant un deuxième dispositif d'amortissement, (33), **caractérisé en ce qu'**un tourillon de configuration cylindrique creuse, associé au boîtier (8) du système de tension (10), saillant par rapport à une position rentrée du piston (9), forme la butée de fin de course élastique (13a, 13b).

2. Système de tension selon la revendication 1, dans lequel, dans une phase de démarrage du moteur à combustion interne (2), la butée de fin de course (13a, 13b) coopère directement ou indirectement avec le moyen de traction (4).

3. Système de tension selon la revendication 1 ou 2, dans lequel, le moyen de traction (4) coopère, dans l'état de fonctionnement, de manière indirecte avec le système de tension (10), par le fait qu'un rail de tension (6) est supporté sur le piston (9).

4. Système de tension selon l'une quelconque des revendications 1 à 3, dans lequel la butée de fin de course (13a, 13b) réalisée sous forme de tourillon est fixée en position sur le boîtier (8).

5. Système de tension selon l'une quelconque des revendications 1 à 4, dans lequel la butée de fin de course (13a, 13b) est centrée sur une portion (23) du cylindre (16) sortant du boîtier (8) et est supportée du côté frontal sur le boîtier (8).

6. Système de tension selon l'une quelconque des revendications 1 à 5, **caractérisé en ce qu'**il comprend une butée de fin de course (13b) en plusieurs parties, formant le dispositif d'amortissement (33).

7. Système de tension selon la revendication 6, dont la butée de fin de course élastique (13b) inclut du côté frontal un disque (25) fabriqué de préférence en un plastique résistant à l'usure, qui coopère notamment dans une phase de démarrage du moteur à combustion interne (2) avec le rail de tension (6).

8. Système de tension selon la revendication 6, dans lequel la butée de fin de course (13b) inclut une douille (24) fabriquée en un matériau métallique, limitée en longueur et fixée sur le boîtier (8) et/ou sur le cylindre (16), qui est connectée par engagement par liaison de matière avec le corps élastique de la butée de fin de course (13b).

9. Système de tension selon l'une quelconque des revendications 1 à 8, dont la butée de fin de course élastique (13a, 13b) est fabriquée en un matériau élastomère.

10. Système de tension selon l'une quelconque des revendications 1 à 9, dans lequel la butée de fin de course (13b) comprend un joint d'étanchéité (27) qui est inséré dans une fente annulaire (26) limitée radialement par le piston (9) et la butée de fin de course (13b) et dont la lèvre d'étanchéité (28) est supportée hermétiquement sur une surface d'enveloppe du piston (9).
